# EUROPÄISCHE PATENTSCHRIFT

(11) **EP 0 366 912 B1**
(45) Veröffentlichungstag und Bekanntmachung des Hinweises auf die Patenterteilung: **01.12.1993**
(21) Anmeldenummer: 89116845.2
(22) Anmeldetag: 12.09.1989
(51) Int. Cl.: F16C 3/10

(54) **Kurbelwelle mit hohlen Zapfen**
Crankshaft with hollow cranks
Vilebrequin à tourillons creux

(30) Priorität: 03.11.1988 DE 3837292
(43) Veröffentlichungstag der Anmeldung: 09.05.1990
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: COHAUSZ HASE DAWIDOWICZ & PARTNER

(56) Entgegenhaltungen:
- EP-A- 0 315 136
- FR-A- 2 622 941
- US-A- 3 432 214

## Beschreibung

Die Erfindung betrifft eine Kurbelwelle mit hohlen Zapfen, die in den Kurbelwangen austretende und mit Spreizmitteln versehene Durchgangsöffnungen aufweisen, wie sie z.B. aus der FR-A-2 622 941 bekannt ist.

Derartige Kurbelwellen werden zur Reduzierung des Gewichts und der Trägheitsmomente sowie zur Materialersparnis aus Kostengründen zunehmend verwendet. Die Wellen können dabei gleich mit Durchgangsöffnungen gegossen oder geschmiedet oder nachträglich hohlgebohrt worden sein und entweder aus einem Gesamtteil oder aus einzelnen später miteinander verfügten Abschnitten hergestellt sein.

Für die letztgenannte Herstellungsvariante ist aus der EP-A-0315 136 eine aus einzelnen Formstücken gebaute Kurbelwelle bekannt, wobei die Formstücke jeweils eine Kurbelwange und zwei Zapfenansätze aufweisen. Diese vorrangemeldete, jedoch nicht vorveröffentlichte Patentanmeldung zählt gemäß Art 54 (3) EPÜ zum Stand der Technik.
Bei der darin offenbarten Kurbelwelle sind zugeordnete Abschnitte eines Lager- oder Hubzapfens ineinandergesteckt oder aneinandergesetzt auf eine gemeinsame Hülse aufgeschoben, wobei die Hülse unter plastischer Verformung aufgeweitet ist. Die Hülsen weisen einen zylindrischen Mittelabschnitt zur Anlage an die Bohrungen der Lager- bzw. Kurbelzapfen und Stirnflächenhereiche mit runden Öffnungen auf, die gegenüber dem Mittelabschnitt einen verkleinerten Außendurchmesser haben. Der einen kleineren Querschnitt aufweisende Hülsenfortsatz hat die Aufgabe, die zwischen der Mantelfläche der Hülsen und den Öffnungen der Lager- bzw. Kurbelzapfen im Bereich des Durchmessersprunges der Hülsen sich bildenden Ringräume zuverlässig gegen den Verlust von Schmiermitteln abzudichten. Die einzelnen Hülsenabschnitte werden mit einem unterschiedlichen Druck beaufschlagt, um den zu verformenden, eine verschiedene Dicke aufweisenden Querschnitten und den verschiedenen Funktionen der einzelnen Abschnitte gerecht zu werden.

Bei Kurbelwellen der genannten Art ist stärker noch als bei konventionellen massiven Kurbelwellen die Problematik einer ausreichenden Biege- und Torsionsfestigkeit bei hohen Lasten sowie die Gefahr der Rißbildung im Bereich der Zapfenansätze an den Kurbelwangen gegeben. Diese Gefahr ist insbesondere durch die Möglichkeit der Verformung des hohlen Zapfenquerschnitts unter dem Einfluß der Gas- und Fliehkräfte verstärkt.

Der vorliegenden Erfindung liegt die Aufgabe zugrunde, eine Kurbelwelle der genannten Art so weiterzubilden, daß erhöhte Belastungen bei weiterhin günstigem Gewicht aufgenommen werden können und der vorstehend genannten Gefahr entgegengewirkt werden kann.

Die Lösung hierfür besteht darin, daß in die Kurbelwangen über deren Querschnitt verteilte separat anordenbare Spreizmittel sowohl in Öffnungen im Bereich der Lagerzapfen und der Hubzapfen als auch in Öffnungen außerhalb der Zapfenquerschnitte eingesetzt sind, die insbesondere zusammen mit Spreizmitteln in den Durchgangsöffnungen der Grundzapfen und/oder Hubzapfen eine bleibende Vorspannung im Material der Kurbelwangen und der Kurbelzapfen erzeugen und aufrechterhalten.

Durch Erzeugen einer derartigen gleichmäßig verteilten bleibenden Vorspannung im Grundmaterial der Kurbelwelle, insbesondere auch der Kurbelwangen, die durch entsprechende, noch näher zu erläuternde Spreizelemente erzeugt werden kann, wird die Biege- und Torsionssteifigkeit der Welle deutlich erhöht, wobei eine weitere Gewichtsreduzierung möglich wird. Durch die auf Druck vorgespannten Spreizmittel wird eine Aussteifung der hohlen Wellenkonstruktion von innen erreicht, so daß örtliche Spannungsspitzen mit der Gefahr der Ausgangsrißbildung durch Einbeuleffekte verhindert werden. Die Aussteifung durch vorgespannte Spreizmittel bewirkt eine Verteilung und Vergleichmäßigung ungünstiger Spannungspitzen von den kritischen Anrißstellen an den Übergängen der Zapfen zu den Wangen weg in andere Wangenbereiche. Dabei kann das Auftreten von Wechselspannungen in den gefährdeten Bereichen vermieden werden, da die Spannungsänderungen bei entsprechender Gestaltung unterhalb der Vorspannung gehalten werden können. Eine um einen positiven oder negativen Wert schwankende Spannung ist dabei für das Grundmaterial im Hinblick auf eine Rißbildung weniger kritisch als eine Zug-Druck-Wechselspannung. Daneben hat die Materialvorspannung noch die vorteilhafte Wirkung, daß die Eigenfrequenz der Kurbelwelle erhöht wird, so daß die in dieser Hinsicht ebenfalls kritische hohle Welle eine gesteigerte Eigenfrequenz erhält, die günstiger zum durch die Drehzahl im Betrieb der Kurbelwelle bestimmten Erregungsbereich liegt.

Nach einer günstigen Ausgestaltung sind als Spreizmittel in die Austrittsöffnungen der Grundzapfen und der Hubzapfen im Bereich der Kurbelwangen eine Anzahl von Hülsen eingesetzt, die eine Vorspannung im Material der Kurbelwangen im wesentlichen gleichmäßig über dem Wangenquerschnitt oder zumindest -umfang hervorrufen. Durch derartige Spreizmittel wird gezielt der kritische durch Rißbildung gefährdete Bereich der Kurbelwelle durch eine überlagerte Druckvorspannung beeinflußt, so daß die erfindungsgemäßen Mittel bevorzugt hier zur Anwendung kommen.

Als Spreizmittel können auch konische Scheiben vorgesehen sein, die im Sinne eines Flachdrückens elastisch oder plastisch verformt werden und dabei eine radiale Vergrößerung erfahren. In einfachster Form können dies konische Blechscheiben sein, die in die Austrittsöffnungen in den Kurbelwangen eingesetzt und auf mechanischem Wege flachgedrückt werden. Eine andere Möglichkeit besteht in konischen Scheiben, die paarweise gegensinnig angeordnet und zentral gegeneinander verspannt sind. Hierbei kann ein Scheibenpaar in jeweils zwei benachbarte Wangen eingesetzt und verspannt werden, es ist auch möglich jeweils ein dicht benachbartes Scheibenpaar im Bereich einer Wange in jede Austrittsöffnung einzusetzen. Die Verspannung kann durch mit Gewindeabschnitten versehene Zuganker erfolgen oder durch eine die konischen Scheiben einstückig verbindende Zwischenhülse, die mechanisch oder hydraulisch aufgeweitet wird. In jedem Fall wird die Wirkung durch ein Flachziehen oder Flachdrücken der konischen oder gewölbten Scheiben erreicht. Diese sollten dabei jeweils in den Austrittsöffnungen eines Hubzapfens und eines Grundzapfens in einer Kurbelwange in einer Ebene liegen.

In Kombination mit der genannten Wangenaussteifung sind zusätzlich zu den Spreizmitteln in den Austrittsöffnungen aus den Grund- und Hubzapfen weitere Spreizmittel in Öffnungen in den Kurbelwangen eingesetzt, die außerhalb der Zapfenquerschnitte liegen. Hierbei kann es sich ebenfalls um runde Hülsen oder runde Zapfen handeln, bevorzugt werden dies jedoch bei einer angenähert runden oder ovalen Form der Kurbelwangen, die besonders günstig ist, im Querschnitt zwickel- oder sichelförmige Spreizkörper sein. Zum axialen Einpressen können diese dabei konus- oder prismenförmig sein. Ein Einsetzen unter Erzeugen einer Vorspannung kann auch nach thermischer Vorbehandlung durch Schrumpfen bzw. Wachsen der ineinandergefügten Teile beim Temperaturausgleich erfolgen. Insbesondere in der Randzone der Kurbelwangen soll hierbei eine gleichmäßige Spannungsverteilung angestrebt werden.

Nach einer weiteren bevorzugten Kombination sind ebenfalls als Spreizmittel in die zylindrischen Abschnitte der Grundzapfen und der Hubzapfen in Form von Hülsen eingesetzt, die eine tangentiale Zugvorspannung auch im Material der Grundzapfen und der Hubzapfen hervorrufen. Es ist ersichtlich, daß die zuvor erwähnten in die Öffnungen in den Kurbelwangen eingesetzten Spreizmittel diese Wirkung zum Teil bereits erfüllen. In bevorzugteer Ausgestaltung sind als Spreizmittel für die Zapfen zylindrische Hülsen vorgesehen, die über die Elastizitätsgrenze hinaus plastisch aufgeweitet sind. Bei geringem Materialaufwand und verhältnismäßig billigem Material ist hierdurch eine Verbesserung der Biege-, Beul- und Torsionssteifigkeit im Bereich der Zapfen zu erzielen. Es ist hervorzuheben, daß die hiermit erwähnte Einzelheit sich insbesondere auch auf einstückige, zum Beispiel hohlgebohrte oder hohlgegossene Kurbelwellen bezieht, wobei nach einer besonderen Ausgestaltung für aus Abschnitten aufgebaute Kurbelwellen das versteifende, die tangentiale Zugspannung im Zapfen erzeugende Hülsenelement gleichzeitig auch die Vorspannung für die Verbindung ineinandergesteckter Zapfenteile erzeugen kann.

Während vorstehend die konischen Scheiben ausschließlich als Spreizelemente im Bereich der Kurbelwangen und die Zylinderhülsen als bevorzugte Spreizelemente im Bereich der Zapfen beschrieben wurden, ist darauf hinweisen, daß beide Mittel in ihrer Verwendung ohne weiteres austauschbar sind, das heißt, daß auch in die Zapfen eine Anordnung von einzelnen spreizbaren Scheibenkörpern eingesetzt werden kann und daß bevorzugt auch im Bereich der Kurbelwangen aufweitbare Hülsen verwendet werden können. Diese können dabei nicht nur hydraulisch, sondern beispielsweise auch mit mechanischen Spreizmitteln gegen die elastische Verformung des Grundmaterials plastisch aufgeweitet werden. Darüberhinaus können auch Hülsen mit zusätzlich eingesetzten Scheibenkörpern oder Stopfen kombiniert werden, womit eine zusätzliche Versteifung gegen Ovalisieren der runden Hohlkörperbereiche erreicht wird.

Während das plastische Aufweiten der Hülsen gegen die elastische Vorspannung des Wellenmaterials als bevorzugtes Herstellungsverfahren genannt wird, bei dem die Materialien mit nach außen zunehmender Streckgrenze ausgewählt werden müssen, ist ein thermisches Fügen (Schrumpfen, Wachsen) der mit Spiel ineinandergesteckten unterschiedlich temperierten Teile als Herstellungsverfahren in gleicher Weise geeignet. Daneben kommt auch das axiale Einpressen zur Erzeugung entsprechender Preßsitze in Frage, soweit die Zugänglichkeit gegeben ist.

Eine bevorzugte Ausgestaltung für die Spreiz- oder Spannelemente, die insbesondere im Zusammenhang mit aus Abschnitten zusammengesetzten Kurbelwellen, die im Bereich der Zapfen geteilt sind, zur Anwendung kommen kann, besteht in miteinander verbundenen abgestuften Hülsen, die sowohl Durchgangsöffnungen in den Zapfen durchsetzen, als auch in Austrittsöffnungen in den Kurbelwangen insbesondere mit reduziertem Durchmesser hineinreichen. Aufgrund der Überschneidung von Grundzapfen und Hubzapfen sind hierbei nach einer bevorzugten Ausgestaltung mehrere halbkreisförmig außermittig angeordnete runde Öffnungen in den Kurbelwangen vorgesehen. In diese Öffnungen können einzelne aufweitbare Hülsen eingesetzt werden. Durch radiale Scheibenteile oder durch die vorher genannten Konusscheiben können innerhalb der hohlen Kurbelzapfen geschlossene Kammern abgetrennt werden, die nach einer weiteren bevorzugten Ausgestaltung mit schwingungsdämpfendem Material, zum Beispiel einem Granulat aus Keramik oder aus Kunststoff, gefüllt werden können.

Bevorzugte Ausführungsbeispiele der Erfindung sind in den Zeichnungen dargestellt.

Hierin zeigt
- Fig. 1: einen Kurbelwellenabschnitt mit Hülsen als Spann- und Verbindungsmittel
- Fig. 2: den Querschnitt A-A nach Figur 4
- Fig. 3: den Querschnitt B-B nach Figur 4
- Fig. 4: einen Kurbelwellenabschnitt mit Hülsen und Konusscheiben als Spannmittel
- Fig. 5: einen Kurbelwellenabschnitt mit Konusscheiben als Spannmittel

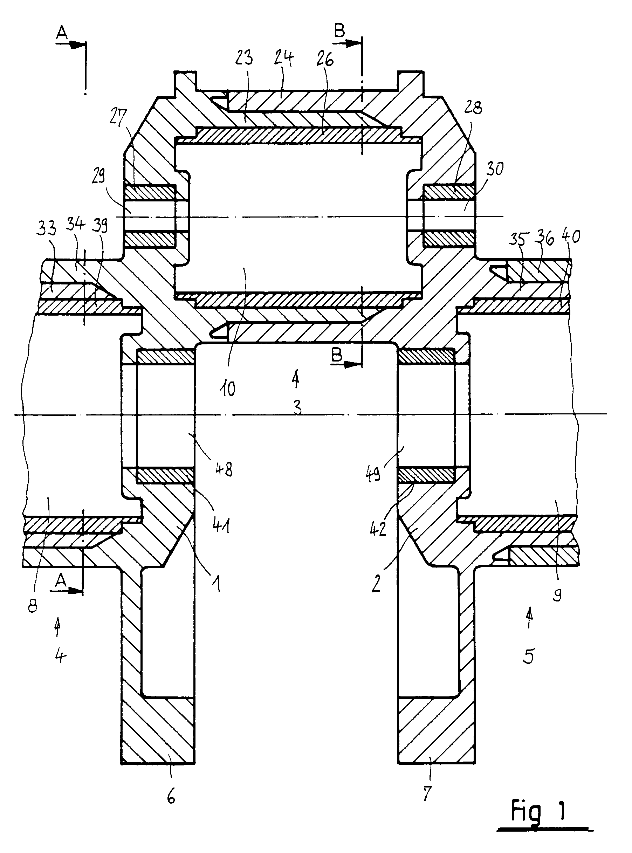

In Fig. 1 ist ein Abschnitt einer Kurbelwelle gezeigt, der zwei Kurbelwangen 1, 2 umfaßt, die über einen Hubzapfen 3 miteinander verbunden sind und an die sich hohle Grundzapfen 4, 5 anschließen. An den Kurbelwangen sind Gegengewichte 6, 7 angeordnet. Der Hubzapfen 3 ist aus ineinandergesteckten Zapfenansätzen 23, 24 zusammengesetzt, die durch eine eingesetze Hülse 26 verbunden und vorgespannt sind. Von der Hülse 26 unabhängige Zylinderhülsen 27, 28 sind in die Austrittsöffnungen 29, 30 der Durchgangsöffnung 10 eingesetzt, die ebenso wie die Hülse 26 mechanisch oder bevorzugt hydraulisch aufgeweitet sind. In ähnlicher Weise wie der Hubzapfen 3 sind die Grundzapfen 4, 5 aus ineinandergesteckten Zapfenansätzen 33 - 34, 35 - 36 aufgebaut, in die jeweils eine aufgweitete Hülse 39, 40 zur Erzeugung einer Vorspannung und zur Verbindung der Zapfenansätze eingesetzt ist. Unabhängig von dieser sind im Bereich der Kurbelwangen in die Durchgangsöffnungen 48, 49 Zylinderhülsen 41, 42 eingesetzt, die ebenfalls hydraulisch oder mechanisch plastisch verformt sind, und eine Vorspannung im Bereich der Kurbelwangen erzeugen.

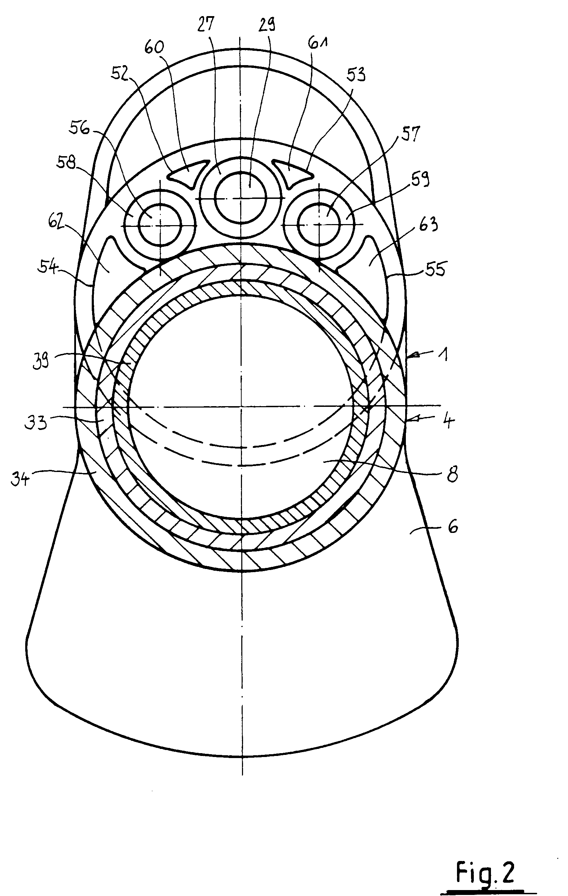

Fig. 2 zeigt im Schnitt entlang der Linie A-A nach Fig. 1 den Grundzapfen 4, der aus den Zapfenansätzen 33, 34 zusammengesteckt ist und in den die Hülse 39 als Verbindungsmittel und Vorspannelement eingesetzt ist. Die Kurbelwange 1 ist in Ansicht erkennbar, wobei neben der Austrittsöffnung 29 des hohlen Hubzapfens weitere runde Austrittsöffnungen 56, 57 vorgesehen sind, die ebenso wie die Austrittsöffnungen 29 durch die Hülse 27 mittels weiterer Hülsen 58, 59 aufgeweitet und vorgespannt sind. Daneben sind als rippenbildende nicht durchgehende Aussparungen oder als Durchgangsöffnungen 52, 53, 54, 55 Strukturen in der Kurbelwange erkennbar, in die Formteile 60, 61, 62, 63 als Spreizmittel eingesetzt sind.

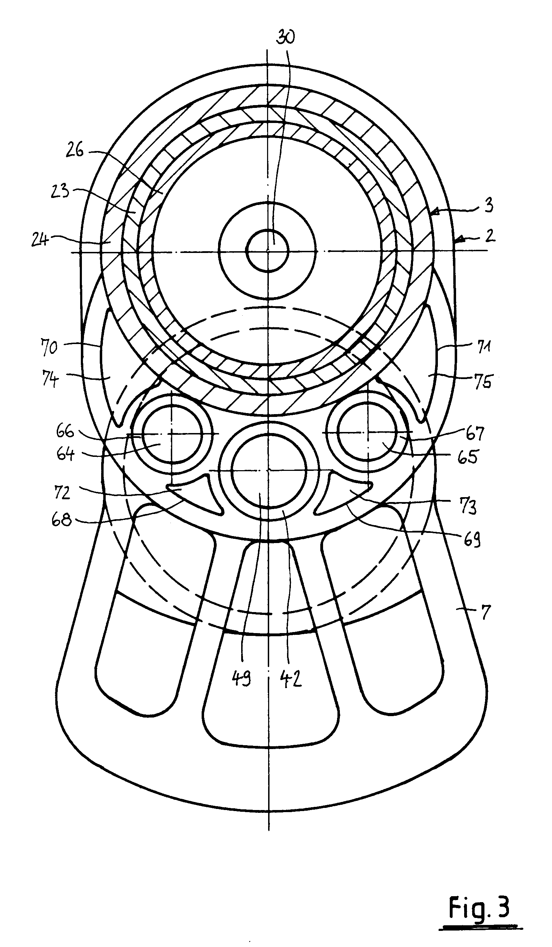

In Fig. 3 ist im Schnitt nach der Linie B-B gemäß Fig. 1 der aus Zapfenhülsen 23, 24 zusammengesteckte mit einer Innenhülse 26 als Vorspannelement versehene Hubzapfen 3 dargestellt, an dem die Austrittsöffnung 30 zu erkennen ist. In der Kurbelwange 1, die in Ansicht dargestellt ist, sind neben der mit einer Hülse 42 versehenen Durchgangsöffnung 49 zwei weitere Austrittsöffnungen 64, 65 erkennbar, die ebenfalls mit Aufweithülsen 66, 67 versehen sind. Weitere als nicht durchgehende rippenbildende Ausnehmungen oder als Durchgangsöffnungen 68, 69, 70, 71 sind mit Formteilen 72, 73, 74, 75 als Spreizmittel vorgespannt.

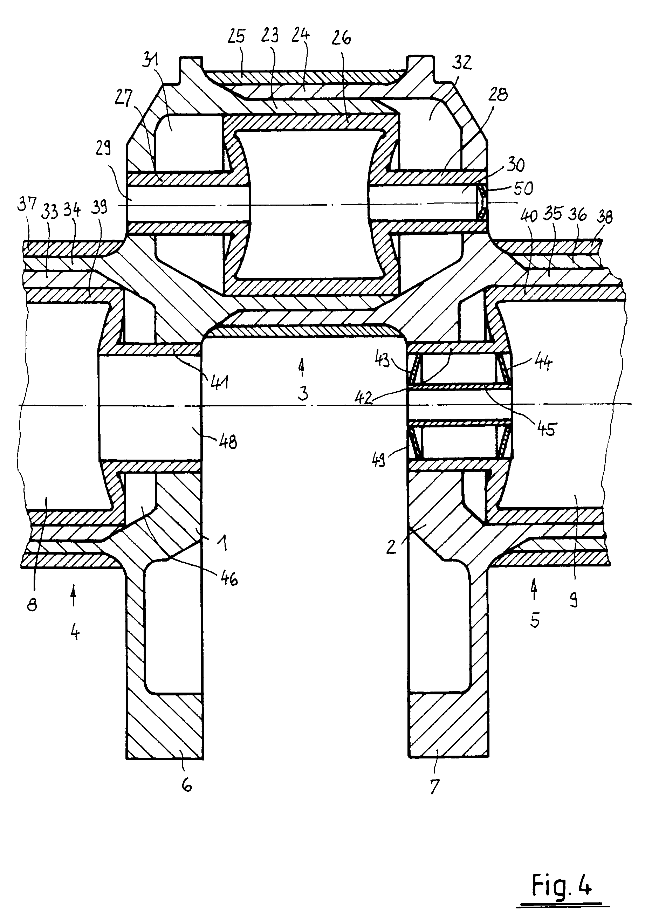

Fig. 4 zeigt wiederum eine Kurbelwelle mit zwei Kurbelwangen 1, 2, die über einen Hubzapfen 3 miteinander verbunden sind und an die sich Grundzapfen 4,5 anschließen. An den Kurbelwangen sind Gegengewichte 6, 7 angeordnet. Der Hubzapfen 3 besteht aus ineinandergesteckten Zapfenansätzen 23, 24, die weiterhin von einer Hülse 25 umschlossen werden. Diese ist aus einem hochfesten Material mit Lagerqualität, das gleichzeitig hohe Vorspannungskräfte aufnimmt. In die Durchgangsöffnung 10 des Hubzapfens ist eine abgestufte Hülse 26 mit einem passend in die Zapfenansätze eingefügten mittleren Bereich und daran anschließenden Zylinderabschnitten 27, 28 geringeren Druchmessers, die in die Austrittsöffnungen 29, 30 in den Kurbelwangen hineinreichen, angesetzt. Ein plastisches Aufweiten der Hülse 26 und des Zapfenansatzes 23 sowie der Zapfenanschlüsse 27, 28, insbesondere auf hydraulischem Wege, bewirkt eine Zugvorspannung im Material des Zapfenansatzes 24 und der Hülse 25 und im Bereich der Kurbelwangen 1, 2. In der Austrittsöffnung 30 ist in den Hülsenabschnitt 28 zusätzlich eine Konusscheibe 50 eingesetzt, die durch zusätzliches plastisches Verformen, beispielsweise durch mechanisches Flachdrücken eine Unterstützung der Vorspannung sowie eine Aussteifung der Zylinderbohrung bewirken kann. Durch die abgestufte Hülse werden innerhalb des Hubzapfens ringförmige Hohlräume 31, 32 gebildet, die mit schwingungsdämpfendem Material aufgefüllt werden können. Die Grundzapfen 4, 5 sind in gleicher Weise wie der Hubzapfen 3 jeweils aus mit einer Kurbelwange einstückigen Zapfenansätzen 33-34, 35-36 zusammengesteckt, die gemeinsam wiederum jeweils von einer Lagerhülse 37, 38 umgeben sind. In die Durchgangsöffnungen 8, 9 sind ähnlich der abgestuften Hülse 26 gestaltete Hülsen 39, 40 eingeschoben, von denen jeweils ein in eine Austrittsöffnungen 48, 49 im Bereich der Kurbelwangen eintretender Hülsenansatz 41, 42 geringeren Durchmessers erkennbar ist. Ein plastisches Aufweiten der Hülsen 39, 40 sowie der Zapfenansätze 34, 35 dient der Erzeugung einer Vorspannung in den Zapfenansätzen 33, 36 sowie der Hülsen 37, 38 unter gleichzeitiger Herstellung der Verbindung der Zapfenansätze miteinander sowie dem Erzeugen einer Vorspannung in den Kurbelwangen. In der Kurbelwange 2 ist in den Hülsenansatz 42 gleichzeitig ein Paar Konusscheiben 43, 44 eingesetzt, das über eine Verbindungshülse 45 einstückig miteinander verbunden ist. Ein mechanisches oder hydraulisches Aufweiten der Hülse 45 bewirkt ein Flachziehen der Scheiben 43, 44 und damit ein weiteres Vorspannen des Hülsenansatzes 42 sowie eine Aussteifung der Zylinderbohrung. Durch die Hülsen 39, 40 entstehen auch hierbei ringförmige Hohlräume 46, 47, die mit schwingungsdämpfendem Material gefüllt werden können.

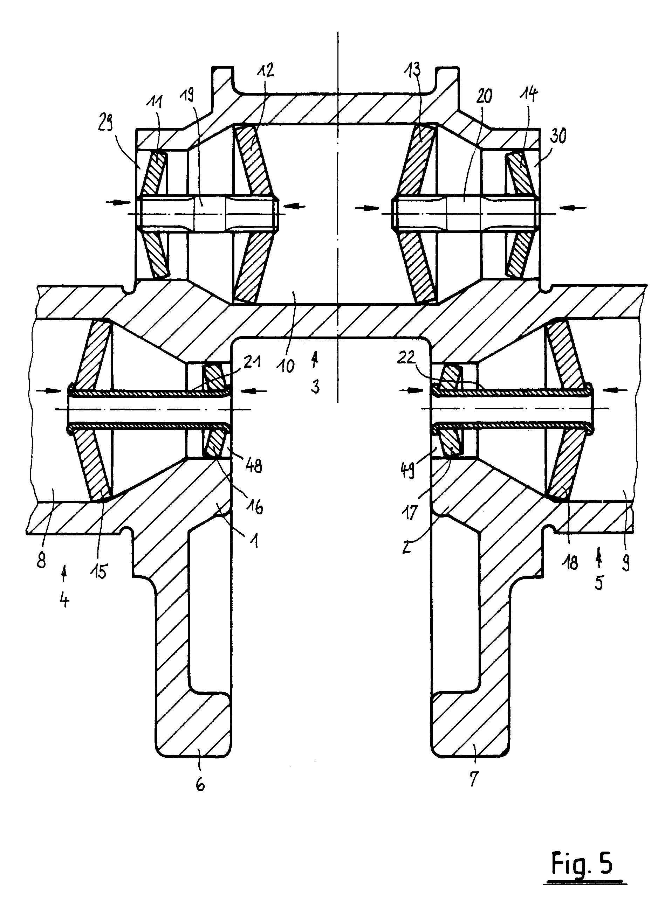

Fig. 5 zeigt einen Abschnitt einer einfachen einstückig hergestellten Kurbelwelle im Bereich zweier Kurbelwangen 1, 2 die über einen Hubzapfen 3 miteinander verbunden sind und an die sich Ansätze von Grundzapfen 4, 5 anschließen. Die Kurbelwangen 1, 2 weisen jeweils entgegengesetzt zum Hubzapfen 3 angeordnete Gegengewichte 6, 7 auf. Die Grundzapfen haben im Bereich der Kurbelwangen reduzierte Durchgangsöffnungen 8, 9. Der Hubzapfen 3 hat eine durchgehende, abgestufte Durchgangsöffnung 10. In Austrittsöffnungen 48, 49 der Grundzapfen 4, 5 im Bereich der Kurbelwangen 1, 2 sind jeweils paarweise gegensinnig angeordnete konische Scheiben 15 - 16, 17 - 18 eingesetzt. In den Austrittsöffnungen 29, 30 der Öffnung 10 im Hubzapfen 3 sind entsprechende paarweise gegenssinnig angeordnete konische Scheiben 11 - 12, 13 - 14 vorgesehen. In die Scheibenpaare in der Durchgangsöffnung 10 des Hubzapfens 3 sind jeweils Gewindestangen 19, 20 mit Gewindeabschnitten entgegengesetzter Steigung zum Verspannen der Scheiben gegeneinander eingesetzt, in die Scheibenpaare in den Durchgangsöffnungen 8, 9 der Hubzapfen 4, 5 sind die Scheiben durch Hohlnieten 21, 22 miteinander verspannt. Ähnliche Mittel stehen ohne weiteres zur Verfügung. Die gezeigte Form der Durchgangsöffnungen mit nach außen reduziertem Durchmesser bedingt bei geschmiedeten Kurbelwellen ein Zusammensetzen der Kurbelwelle im Bereich der Zapfen, beispielsweise durch stumpfes Aneinanderschweißen in der Zapfenmittenebene.

Auch in den Ausführungen nach den Fig. 4 und 5 sind außerhalb der Schnittebene weitere Spreizmittel in weitere Öffnungen in den Kurbelwangen eingesetzt und aufgeweitet oder axial eingepreßt.

## Patentansprüche

1. Kurbelwelle mit hohlen Zapfen (3, 4, 5), die in den Kurbelwangen
(1, 2) austretende und mit Spreizmitteln (27, 28, 41, 42) versehene Durchgangsöffnungen (29, 30, 48, 49) aufweisen, dadurch gekennzeichnet, daß die Spreizmittel (27, 28, 41, 42, 58, 59, 60-63, 66, 67, 72-75) separat anordenbar ausgebildet sind und sowohl in Öffnungen (29, 30, 48, 49, 52, 53, 56, 57, 64, 65, 68, 69) im Bereich der Lager-(4, 5) und Hubzapfen (3) als auch in Öffnungen (54, 55, 70, 71) eingesetzt sind, die über den nicht durch die Durchgangsöffnungen (29, 30, 48, 49, 52, 53, 56, 57, 64, 65, 68, 69) beanspruchten Teil der Kurbelwangen (1, 2) verteilt sind und im Material der Kurbelwangen (1, 2) eine bleibende Vorspannung erzeugen und aufrechterhalten.

2. Kurbelwelle nach Anspruch 1,
dadurch gekennzeichnet,
daß Spreizmittel in die Durchgangsöffnungen (8, 9, 10) in den Grundzapfen (4, 5) und/oder Hubzapfen (3) eingesetzt sind, die eine bleibende Vorspannung im Material der Kurbelzapfen erzeugen und aufrechterhalten.

3. Kurbelwelle nach Anspruch 1,
dadurch gekennzeichnet,
daß als Spreizmittel in den Kurbelwangen (1, 2) zylindrische Hülsen (27, 28; 41, 42; 58, 59, 66, 67) vorgesehen sind, die insbesondere über die Elastizitätsgrenze hinaus plastisch radial aufgeweitet sind.

4. Kurbelwelle nach Anspruch 1 und 3,
dadurch gekennzeichnet,
daß als Spreizmittel in den Kurbelwangen im Querschnitt runde, sichelförmige oder dreiecksähnliche Formkörper mit insbesondere in Längsrichtung konischer oder prismischer Gestalt mit bleibender Vorspannung eingesetzt oder eingepreßt sind.

5. Kurbelwelle nach Anspruch 1 und 3,
dadurch gekennzeichnet,
daß als Spreizmittel in den Kurbelwangen (1, 2) konische Scheiben (11-12, 13-14, 15-16, 17-18, 43-44) vorgesehen sind, die durch elastische oder plastische Verformung zur ebenen Scheibe hin radial vergrößert sind.

6. Kurbelwelle nach Anspruch 5,
dadurch gekennzeichnet,
daß die konischen Scheiben (11-12, 13-14, 15-16, 17-18, 43-44) paarweise gegensinnig angeordnet und zentral axial gegeneinander verspannt sind.

7. Kurbelwelle nach Anspruch 6,
dadurch gekennzeichnet,
daß die konischen Scheiben (11-12, 13-14) axial durch Zuganker (19,20) oder durch Hohlnieten (21, 22) miteinander verspannt sind.

8. Kurbelwelle nach Anspruch 6,
dadurch gekennzeichnet,
daß die konischen Scheiben (43-44) durch aufgeweitete einstückig angeformte Verbindungshülsen (45) axial verspannt sind.

9. Kurbelwelle nach Anspruch 1 und 2,
dadurch gekennzeichnet,
daß als Spreizmittel in den Grundzapfen (4, 5) und/oder den Hubzapfen (3) zylindrische Hülsen (26, 39, 40) eingesetzt sind, die insbesondere über die Elastizitätsgrenze hinaus verformt sind.

10. Kurbelwelle nach einem der Ansprüche 1 bis 9,
dadurch gekennzeichnet,
daß sie als einstückiges Schmiedeteil oder Gußteil ausgebildet ist.

11. Kurbelwelle nach einem der Ansprüche 1 bis 9,
dadurch gekennzeichnet,
daß sie aus im Bereich der Hub- und/oder Grundzapfen (3, 4, 5) stumpf verschweißten, insbesondere geschmiedeten Einzelabschnitten hergestellt ist.

12. Kurbelwelle nach einem der Ansprüche 1 bis 9,
dadurch gekennzeichnet,
daß sie aus mit ineinandergesteckten, gegeneinander verspannten oder miteinander verlöteten Zapfenstücken der Hub- und/oder Grundzapfen (3, 4, 5) versehenen Einzelabschnitten hergestellt ist.

13. Kurbelwelle nach einem der Ansprüche 1 bis 12,
dadurch gekennzeichnet,
daß als Spreizmittel in den Kurbelwangen (1, 2) dienende Zylinderhülsen (27, 28,;41, 42) einstückig mit Hülsenabschnitten (26; 39; 40) ausgebildet sind, die als Spreizmittel und gegebenenfalls als Verspannmittel für die Hub- und Grundzapfen (3, 4, 5) dienen.

14. Kurbelwelle nach einem der Ansprüche 1 bis 13,
dadurch gekennzeichnet,
daß die Spreiz- und Verspannmittel für einen zusammengesteckten Grundzapfen (4, 5) aus einer mittleren Hülse (39, 40) größeren Durchmessers und sich daran beidseitig insbesondere koaxial anschließenden Hülsen (41; 42) kleineren Durchmessers bestehen.

15. Kurbelwelle nach einem der Ansprüche 1 bis 14,
dadurch gekennzeichnet,
daß in den Kurbelwangen (1, 2) durch die Spreiz- und Verspannmittel gebildete und abgeschlossene Hohlräume (31, 32, 46, 47) durch schwingungsdämpfendes Material, insbesondere Granulat aus Keramik oder Kunststoff verfüllt sind.

## Claims

1. A crankshaft with hollow journals (3, 4, 5) which have through openings (29, 30, 48, 49) which issue in the crank webs (1, 2) and which are provided with spreading means (27, 28, 41, 42), characterised in that the spreading means (27, 28, 41, 42, 58, 59, 60-63, 66, 67, 72-75) are designed so that they can be arranged separately and are fitted both in openings (29, 30, 48, 49, 52, 53, 56, 57, 64, 65, 68, 69) in the region of the bearing journals (4, 5) and the crank pin journal (3) and also in openings (54, 55, 70, 71) which are distributed over the part of the crank webs (1, 2), which is not occupied by the through openings (29, 30, 48, 49, 52, 53, 56, 57, 64, 65, 68, 69), and produce and maintain a permanent prestressing in the material of the crank webs (1, 2).

2. A crankshaft according to claim 1 characterised in that spreading means are fitted into the through openings (8, 9, 10) in the main journals (4, 5) and/or the crank pin journal (3), which produce and maintain a permanent prestressing in the material of the crank journals.

3. A crankshaft according to claim 1 characterised in that cylindrical sleeves (27, 28; 41, 42; 58, 59, 66, 67) are provided as spreading means in the crank webs (1, 2), which sleeves are plastically radially expanded in particular beyond the elastic limit.

4. A crankshaft according to claim 1 and claim 3 characterised in that shaped bodies of round, sickle-shaped or triangular-like cross-section and of in particular a configuration which is conical or prismatic in the longitudinal direction are inserted or pressed into position as spreading means in the crank webs, with permanent prestressing.

5. A crankshaft according to claim 1 and claim 3 characterised in that conical discs (11-12, 13-14, 15-16, 17-18, 43-44) are provided as spreading means in the crank webs (1, 2), which discs are radially increased in size by elastic or plastic deformation towards the flat disc configuration.

6. A crankshaft according to claim 5 characterised in that the conical discs (11-12, 13-14, 15-16, 17-18, 43-44) are arranged in pairs in opposite directions and are centrally axially braced towards each other.

7. A crankshaft according to claim 6 characterised in that the conical discs (11-12, 13-14) are axially braced to each other by tie anchors (19, 20) or by hollow rivets (21, 22).

8. A crankshaft according to claim 6 characterised in that the conical discs (43-44) are axially braced by expanded connecting sleeves (45) which are integrally formed thereon.

9. A crankshaft according to claim 1 and claim 2 characterised in that cylindrical sleeves (26, 39, 40) are fitted as spreading means in the main journals (4, 5) and/or the crank pin journals (3), which sleeves are deformed in particular beyond the elastic limit.

10. A crankshaft according to one of claims 1 to 9 characterised in that it is in the form of an integral forging or casting.

11. A crankshaft according to one of claims 1 to 9 characterised in that it is produced from in particular forged individual portions which are butt-welded in the region of the crank pin and/or main journals (3, 4, 5).

12. A crankshaft according to one of claims 1 to 9 characterised in that it is produced from individual portions provided with journal portions of the crank pin and/or main journals (3, 4, 5), which journal portions are fitted one into the other, braced relative to each other or soldered to each other.

13. A crankshaft according to one of claims 1 to 12 characterised in that cylindrical sleeves (27, 28; 41, 42) which serve as spreading means in the crank webs (1, 2) are formed integrally with sleeve portions (26; 39; 40) which serve as spreading means and possibly as bracing means for the crank pin and main journals (3, 4, 5).

14. A crankshaft according to one of claims 1 to 13 characterised in that the spreading and bracing means for a composite main journal (4, 5) comprise a middle sleeve (39, 40) of larger diameter and sleeves (41; 42) of smaller diameter which in particular coaxially adjoin same on both sides.

15. A crankshaft according to one of claims 1 to 14 characterized in that cavities (31, 32, 46, 47) which are formed in the crank webs (1, 2) by the spreading and bracing means and closed off thereby are filled by vibration-damping material, in particular granular ceramic or plastics material.

## Revendications

1. Vilebrequin, avec des tourillons et manetons creux (3, 4, 5) présentant des ouvertures débouchantes (29, 30, 48, 49), qui débouchent dans les flasques de vilebrequin (1, 2) et sont dotées de moyens expansibles (27, 28, 41, 42), **caractérisé** en ce que les moyens expansibles (27, 28, 41, 42, 58, 59, 60-63, 66, 67, 72-75) sont conçus de manière à pouvoir être séparément disposés et sont insérés tant dans des ouvertures (29, 30, 48, 49, 52, 53, 56, 57, 64, 65, 68, 69) présentes dans la région des tourillons (4, 5) et manetons (3), que dans des ouvertures (54, 55, 70, 71) qui sont réparties dans la partie des flasques de vilebrequin (1, 2) non sollicitée par les ouvertures débouchantes (29, 30, 48, 49, 52, 53, 56, 57, 64, 65, 68, 69), et produisent et maintiennent une précontrainte permanente dans le matériau des flasques de vilebrequin (1, 2).

2. Vilebrequin selon la revendication 1, **caractérisé** en ce que des moyens expansibles sont insérés dans les ouvertures débouchantes (8, 9, 10) des tourillons (4, 5) et/ou manetons (3), qui produisent et maintiennent une précontrainte permanente dans le matériau des flasques de vilebrequin.

3. Vilebrequin selon la revendication 1, **caractérisé** en ce que des douilles cylindriques (27, 28 ; 41, 42 ; 58, 59, 66, 67), qui sont notamment élargies plastiquement au-delà de la limite d'élasticité dans le sens radial, sont prévues comme moyens expansibles dans les flasques de vilebrequin (1, 2).

4. Vilebrequin selon les revendications 1 et 3, **caractérisé** en ce que des corps façonnés de section ronde, en forme de croissant ou approximativement triangulaire, avec notamment une configuration conique ou prismatique dans le sens longitudinal, sont insérés ou emmanchés avec précontrainte permanente dans les flasques de vilebrequin comme moyens expansibles.

5. Vilebrequin selon les revendications 1 et 3, **caractérisé** en ce que des disques coniques (11-12, 13-14, 15-16, 17-18, 43-44), qui sont agrandis radialement par déformation élastique ou plastique en direction du disque plan, sont prévus comme moyens expansibles dans les flasques de vilebrequin (1, 2).

6. Vilebrequin selon la revendication 5, **caractérisé** en ce que les disques coniques (11-12, 13-14, 15-16, 17-18, 43-44) sont disposés par paires en étant mutuellement opposés, et sont serrés centralement et axialement l'un contre l'autre.

7. Vilebrequin selon la revendication 6, **caractérisé** en ce que les disques coniques (11-12, 13-14) sont assemblés l'un à l'autre par serrage axial au moyen de tirants (19, 20) ou de rivets creux (21, 22).

8. Vilebrequin selon la revendication 6, **caractérisé** en ce que les disques coniques (43-44) sont assemblés par serrage axial au moyen de douilles d'assemblage solidaires élargies (45).

9. Vilebrequin selon les revendications 1 et 2, **caractérisé** en ce que des douilles cylindriques (26, 39, 40), qui sont notamment déformées au-delà de la limite d'élasticité, sont insérées comme moyens expansibles dans les tourillons (4, 5) et/ou dans les manetons (3).

10. Vilebrequin selon l'une quelconque des revendications 1 à 9, **caractérisé** en ce qu'il est réalisé en une seule pièce de forge ou de fonderie.

11. Vilebrequin selon l'une quelconque des revendications 1 à 9, **caractérisé** en ce qu'il est constitué de tronçons individuels, notamment forgés, qui sont assemblés par soudage en bout dans la région des manetons et/ou tourillons (3, 4, 5).

12. Vilebrequin selon l'une quelconque des revendications 1 à 9, **caractérisé** en ce qu'il est constitué de tronçons individuels pourvus de parties, mutuellement emboîtées et assemblées par serrage ou brasage, des manetons et/ou tourillons (3, 4, 5).

13. Vilebrequin selon l'une quelconque des revendications 1 à 12, **caractérisé** en ce que des douilles cylindriques (27, 28 ; 41, 42), servant de moyens expansibles dans les flasques de vilebrequin (1, 2), sont réalisées d'une pièce avec des parties de douilles (26 ; 39, 40) qui servent de moyens expansibles et, le cas échéant, de moyens d'assemblage par serrage pour les manetons et tourillons (3, 4, 5).

14. Vilebrequin selon l'une quelconque des revendications 1 à 13, **caractérisé** en ce que les moyens expansibles et d'assemblage par serrage pour un tourillon (4, 5) en plusieurs parties, sont constitués d'une douille centrale (39, 40) de plus grand diamètre à laquelle se raccordent de part et d'autre, notamment coaxialement, des douilles (41 ; 42) de plus petit diamètre.

15. Vilebrequin selon l'une quelconque des revendications 1 à 14, **caractérisé** en ce que des cavités (31, 32, 46, 47), formées dans les flasques de vilebrequin (1, 2) par les moyens expansibles et d'assemblage par serrage, et fermées, sont remplies d'un matériau amortissant les vibrations, notamment de granulés de matière céramique ou plastique.
